# EUROPEAN PATENT APPLICATION

(11) **EP 4 549 761 A1**
(43) Date of publication of application: **07.05.2025**
(21) Application number: 23207472.4
(22) Date of filing: 02.11.2023
(51) Int. Cl.: F16B 43/00, F16B 2/00, F16B 5/02, F16B 5/06

(54) **COMBINED WASHER WITH EXTRA FEATURES FOR ALIGNMENT**

(71) Applicant: Volvo Car Corporation, 405 31 Göteborg (SE)
(72) Inventor: Skagius, Adam, 413 18 Göteborg (SE); Nordell, Magnus, 425 65 Hisings Kärra (SE)
(74) Representative: Nederlandsch Octrooibureau

(57) **Abstract**

A combined washer comprising an annular disc with a central hole; and a cylindrical stem comprising a textured exterior surface and extending perpendicularly from the first side of the annular disc, wherein the textured exterior surface is configured to create a mechanical lock and avoid slipping.

## Description

### Technical Field

The present disclosure relates to the fastener field, in particular washers used in conjunction with bolts, screws, and/or nuts.

### Background of the Present Disclosure

Bolts and screws may join one or more receiving parts at a bolted joint or a screw joint. For brevity, the term bolt will be used to mean a bolt or a screw. Additionally, the term bolted joint will be used to mean a bolted joint or a screw joint.

A serration bolt may have serrations on its shank to create a locking feature at the bolted joint and therefore avoid slipping. The serrations may avoid slipping by creating a clamping force at the bolted joint. Generally, the larger the bolt the larger the clamping force it can generate. Serration bolts, having serrations on its shank, have been used to downsize bolts while maintaining the necessary clamping force at the bolted joint when assembling receiving parts.

However, serration bolts require access to both sides of a receiving part during assembly. For example, a first side of the assembly may require enough clearance to insert the serration bolt and a second side of the assembly may require enough clearance for a tightening tool fully assemble the receiving part(s) with the serration bolt.

There is a trend to make things smaller and more compact. For example, vehicle engines have become compact, which reduces the access to the tip or head of a bolt used to assemble the engine. Once the bolt is in its final position, it may be difficult to access the bolt to loosen or tighten it.

Additionally, the screw joint may be subject to shear forces which make the bolt slip. To withstand the shear forces and prohibit the bolt from slipping, one may use larger bolts to generate more friction, as compared to a smaller bolt, and prevent the bolt from slipping. However, larger bolts are in conflict with the trend to make things smaller and more compact.

The background section relating to using serration bolts in the assembly of receiving part(s) is merely intended to provide a contextual overview of some current issues and is not intended to be exhaustive. Other contextual information may become apparent to a person of skill in the art upon review of the following detailed description.

### Summary of the Present Disclosure

According to an embodiment, a combined washer may comprise an annular disc with a central hole; and a cylindrical stem comprising a textured exterior surface and extending perpendicularly from a first side of the annular disc. Providing a stem with such a textured exterior surface in the combined washer results in a better mechanical lock, thereby minimizing and/or preventing slippage.

The annular disc, or washer, and stem of the combined washer may create a mechanical lock between the combined washer and a receiving part. The combined washer helps to protect a bolt used in assembling the receiving part from shear forces which can help to minimize or prevent slippage. In particular, the textured exterior surface creates friction or clamping forces between the combined washer and a surface of the receiving part. The combined washer reduces the shear area to which the bolt is exposed and reduces the exposure of a bolt to shear forces.

The mechanical lock of the combined washer may protect a bolt or screw from shear forces. This allows an assembly to reduce the size of bolts due to the reduced shear forces acting on the bolted joint. Reducing bolt size can be done without sacrificing clamping force because, as compared to a conventional bolt alone, the mechanical lock generates a larger clamping force. Therefore, such an assembly may replace conventional bolts with smaller bolts or screws with a combined washer because the combined washer protects the bolted joint from shear forces. Reducing the bolt sizes in an assembly may reduce cost, materials and weight of an assembly.

Including the combined washer with a bolt or nut can further reduce part handling and piece price because the reduced bolt size requires less assembly torque as compared to a larger bolt. As a result, there is a potential for using smaller tools during assembly.

According to an embodiment, the cylindrical stem is hollow, and the central hole of the annular disc aligns with a hollow interior of the cylindrical stem. Such a hollow washer provides for a lightweight but effective washer to secure parts together at a joint while minimizing or preventing slippage.

According to an embodiment, the textured exterior surface is knurled and/or comprises serrations. Such a textured exterior surface creates friction and/or clamping forces between the combined washer and a receiving part of an assembly, and therefore may create a mechanical lock between the combined washer and a receiving part. Such a mechanical lock between the combined washer and the receiving part allows the combined washer to absorb shear forces that would otherwise act on the bolted joint. The friction, locking and/or clamping force helps to minimize or prevents slippage. The stem may comprise other textured exterior surfaces capable of providing the necessary friction and/or clamping force.

According to an embodiment, the combined washer is formed of steel such as phosphorous steel. Steel is a strong and cost-effective material that may be suitable for vehicle parts. Other materials may be suitable for other applications. In addition to being strong and cost effective, steel is a readily available material. Combined washers made of phosphorous steel are able to generate a strong mechanical lock between the combined washer and a receiving part thereby helping to protect a bolt or screw from shear forces.

According to an embodiment, the annular disc has a larger diameter than the cylindrical stem and extends wider than the cylindrical stem to form a shoulder around the cylindrical stem on the first side of the annular disc. Optionally, the shoulder of the annular disc may further comprise a further textured surface. The shoulder provides another point of contact between the combined washer and the receiving part to generate more friction and/or clamping force to minimize or prevent slippage.

According to an embodiment, the combined washer is configured to be installed on a bolt or screw such that the combined washer connects around a shank of the bolt or screw between a head and a threaded portion of the bolt or screw. Using the combined washer with a bolt helps to shield the bolt from shear forces. For example, in a vehicle assembly a bolted joint may be subject to shear forces while the vehicle is in motion. Using the combined washer reduces the area on which shear forces act on the bolt to minimize or prevent slippage.

According to an embodiment, the bolt or screw is configured to be able to rotate with respect to the combined washer when the combined washer is installed on the bolt or screw. This allows rotation and/or tightening or loosening of the bolt while keeping the combined washer in its position in a receiving part of an assembly for securing the fastener and joined parts.

According to an embodiment, the combined washer is configured to be installed on a nut. Using the combined washer with a nut helps to shield the bolt from shear forces as previously described. Additionally, this provides more accessibility to tighten a bolt. For example, if a bolt head is not accessible with a tightening tool one may tighten a bolt from an opposite end.

According to an embodiment, the second side of the combined washer comprises a notch configured to receive a rim of the nut such that the combined washer is connected to the nut, and wherein the nut is configured to be able to rotate with respect to the combined washer when the combined washer is installed on the nut. This allows rotation and/or tightening or loosening of the nut while keeping the combined washer in its position in a receiving part of an assembly.

According to an embodiment, the stem should snuggly fit, or press fit, into a receiving part of an assembly. The diameter and textured exterior surface of the stem of the combined washer should be designed to create a mechanical lock with the receiving part but also allow disassembly. For example, the bolt should be able to be loosened to remove the bolt and combined washer. Considerations for the diameter and textured exterior surface of the stem may include but are not limited to the material of the combined washer, the material of the receiving part, the diameter of the receiving cavity of the receiving part.

According to an embodiment, the hollow cylindrical stem is configured to receive a threaded portion of a bolt or screw such that the threaded portion can pass through the stem to reach the nut when the combined washer is installed on the nut. This allows the creation of a bolted joint between a nut and bolt from the opposite side of the bolt head, which is especially useful when working in tight areas (e.g., an engine of a vehicle), where the bolt head is not accessible with a tightening tool.

According to an embodiment, the inside of the hollow cylindrical stem has a larger diameter than the diameter of the threaded portion of the bolt or screw. This allows a threaded portion of the bolt to pass through the stem of the combined washer and engage with the threads of the nut.

According to an embodiment, a bolt or screw comprises the combined washer as previously described. This provides a convenient bolt or screw which includes the combined washer to minimize or prevent slippage of a bolt using a single fastener and avoid the need to put multiple parts together when fastening (as is needed when using conventional bolts and nuts). Thus, assembly and usage can be both easier and faster.

According to an embodiment, a nut comprises the combined washer as previously described. Including the combined washer with a nut allows tightening or loosening of a bolted joint from a side opposite of a bolt head. In cases where a bolt head does not have accessibility for a tightening tool, tightening a bolt via a nut may be preferable. Additionally, connecting the combined washer to a nut provides a single fastener for creating a mechanically locked bolted joint.

Additionally, such a configuration of a combined washer with a bolt or screw allows the combined washer and bolt to replace larger bolts reducing the overall weight of the assembly. The mechanical lock allows enough clamping force on the bolted joint from a single point of access on the assembly, which reduces assembly time.

The combined washer may be connected to a bolt or nut in such a way that the combined washer may rotate relative with respect to the bolt or nut when installed on a bolt or nut. This allows the bolt or nut to be loosened or tightened without disturbing the mechanical lock between the combined washer and the receiving part.

The combined washer connected to a nut may provide access to a bolted joint. If an assembly does not provide access to a bolt head a combined washer connected to a nut may provide access to create a bolted joint from a different angle or side of the assembly. This allows access not possible with conventional (serrated) bolts. For example, as vehicle engines become more compact, accessibility may be an issue during assembly or service. The combined washer herein described provides more flexibility for tightening/loosening a bolt or nut. Adding the mechanical locking feature to the other side of the assembly may make the assembly more accessible and serviceable.

The stem of the combined washer may be configured to align a bolt. During assembly, the stem may direct the bolt in a correct direction to make sure it aligns to all holes in a receiving part(s).

Additionally, the combined washer allows the use of a smaller bolt under the same environment. For example, a conventional serrated screw may be replaced with a bolt of a smaller size when incorporated with a combined washer. The combined washer and smaller bolt may reduce the overall mass of the assembly. In vehicles, the reduced weight, or mass, may increase fuel efficiency among other benefits.

A bolt or screw may include the combined washer previously described. The bolt or screw may comprise a head, a shank and a threaded portion. The combined washer may be installed on the bolt or screw such that the combined washer is between the head and threaded portion of the bolt or screw and around the shank of the bolt or screw.

A nut may include the combined washer previously described. The nut may comprise a rim and the combined washer may comprise a notch. The combined washer may be installed on the nut such that the notch of the combined washer receives the rim of the nut.

### Brief Description of the Drawings

The present disclosure will now be described in further detail with reference to the drawings that shows one embodiment of the present disclosure:
FIG. 1A is a perspective view of a combined washer including a stem configured to create a locking function according to at least one example of the disclosure;
FIG. 1B is a cross-sectional view of the combined washer of FIG. 1A;
FIG. 1C is an end view of the combined washer of FIG. 1A;
FIGS. 2A - 2D are cross-sectional views of a combined washer which is preassembled with a bolt or screw according to at least one example of the disclosure;
FIGS. 3A- 3D are a cross sectional view of a combined washer which is preassembled with a nut according to at least one example of the disclosure;
FIGS. 4A - 4E are perspective views of combined washers with different surface textures of stems;
FIG. 5 is a cross sectional view of combined washer connected to a bolt to join two parts;
FIG. 6 is a cross sectional view of combined washer connected to a nut and connected to a bolt to join two parts; and
FIG. 7 is a cross sectional view of combined washer connected to a bolt and a nut to joint two parts.

### Detailed Description

The present disclosure is directed to a combined washer comprising a washer and a stem. The stem includes an exterior surface configured to generate a mechanical lock between the combined washer and a receiving part of an assembly and can be any number of different surface textures including but not limited to smooth, dimples, rough turned, serrations, a knurled surface, spiral serrations, a hatched surface, and a pattern of bumps. The combined washer may be used with a bolt or nut to create a bolted joint in assembling one or more receiving parts and/or may be included with a preassembled ("SEM") bolt, screw or nut to fasten one or more receiving parts.

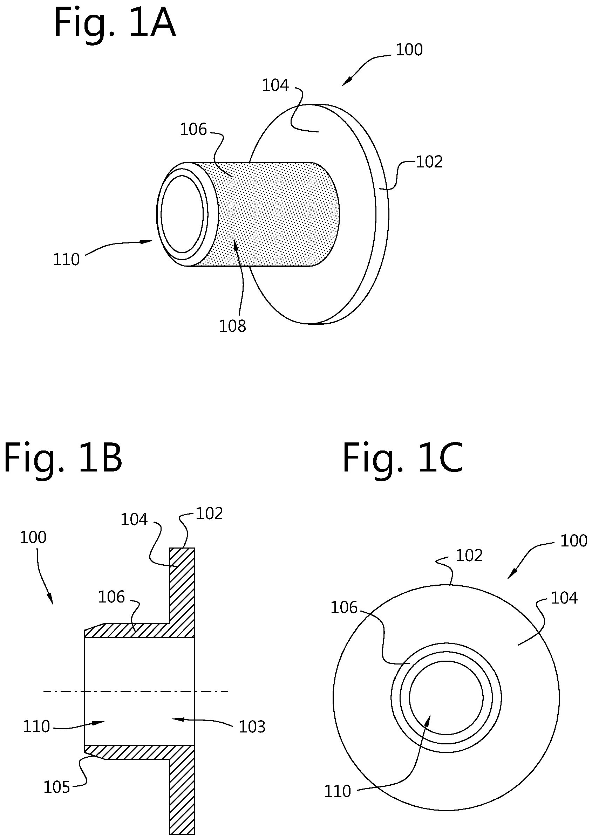

FIG. 1A is a perspective view of combined washer 100, FIG. 1B is a cross-sectional view of combined washer 100 and FIG. 1C is an end view of combined washer 100. Combined washer 100 includes annular disc 102 with central hole 103, first washer surface 104, and stem 106 with stem exterior surface 108, and cavity 110.

Stem 106 is cylindrical and extends perpendicularly from first washer surface 104 of disc 102, generally at the center of disc 102. Stem 106 includes a textured exterior surface 108 which can extend over all or just part of exterior surface of stem 108, for example, from the side connecting to disc 102 toward the end of stem but not to the end. In some embodiments (including that shown in Figs. 1A-1C), stem 106 has a tapered end 105, which can help with insertion of stem 106 into a hole or cavity for forming a joint. Stem 106 is typically hollow and includes cavity 110, which is typically cylindrical and extends through the length of stem 106. Cavity 110 may be sized and configured to fit around a shank of the bolt or a threaded length of the bolt.

The length of stem 106 may vary but is typically a 0,5 to 3 times the diameter of the bolt for which it is intended to be used.

Combined washer 100 may formed from steel, phosphorus steel, aluminum, plastic or any other material appropriate for the desired assembly depending on assembly requirements.

Typically, combined washer 100 would be integrally formed, for example, from cutting, stamping, machining, moulding, pressing, printing, or any other suitable method. Texturing of surface 108 could be done by shot peening, knurling, etching, pressing or any other suitable method. In some embodiment, disc 102 and stem 108 could be formed separately and then joined together.

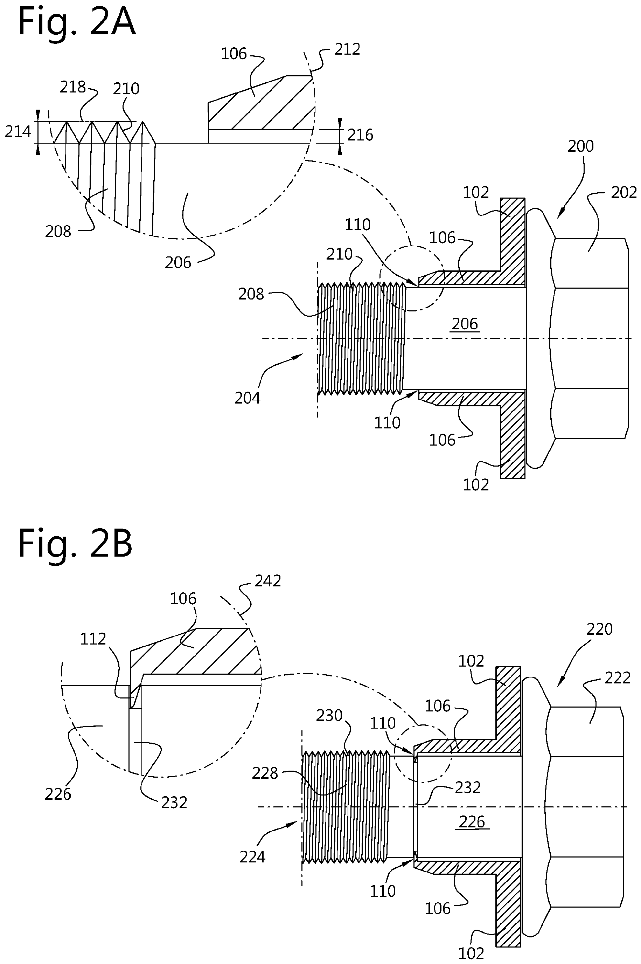

FIG. 2A is a cross sectional view of a first example of combined washer 100, which has been preassembled on bolt 200, (hereinafter "SEM bolt"). SEM bolt 200 includes a bolt head 202 and bolt shaft 204. Bolt shaft 204 includes threads 210 and shank 206. Shank 206 extends perpendicularly from head 202 and is typically smooth on the outer surface. Threads typically 210 extend from an end of shank 206 to a tip (not shown) of SEM bolt 200, though could end before an end of bolt 200 in some embodiments.

In this example, combined washer 100 is positioned between bolt head 202 and threads 210, positioned on shank 206. Combined washer 100 is in a position on bolt 200 such that stem 106 and disc 102 extend around shank 206 for at least part of the length of shank 206. The diameter of cavity 110 is such that combined washer 100 is loose around shank 206 and can move and/or rotate with respect to shank 206, but not large enough to move over or slide past threads 210. Thus, bolt 200 may rotate without rotating combined washer 100 and vice versa when combined washer 100 installed on bolt 200. For example, the diameter of cavity 110 (or inner diameter of stem 106) is bigger than the outer diameter of shank 206. Additionally, threads 210 have a major diameter 218, which is the outer diameter of the peaks of the threads, that is bigger than the diameter of cavity 110 and prevents combined washer 100 from sliding onto threads 210.

Closeup 212 illustrates how major diameter 218 keeps combined washer 100 on SEM bolt 200. The distance 214 from the surface of shank 206 to major diameter 218 is larger than distance 216 from the surface of shank 206 to stem 106. For example, distance 214 may be greater than distance 216. Distance 216 should be less than a height of threads 210 but big enough to fit loosely around shank 206. For example, an M14 bolt having a major diameter of 14 mm and a minor diameter of 11.5 mm may include a combined washer 100 configured for an M14 bolt. This combined washer may have a stem cavity 110 that is between 12.7 mm and 12.8 mm. The washer hole for this combined washer may be between 12.9 mm and 13.7 mm. This allows the combined washer to loosely fit around the shank of an M14 bolt without being able to slide past the threads of an M14 bolt. A person of skill in the art understands that combined washers configured for different sized bolts will have similarly proportional dimensions.

Alternatively, or in addition, an end of washer 100 could be crimped to ensure that at least the end of stem 106 cannot fit over threads 210, thereby ensuring that washer 200 stays connected around bolt 200. Such connection features are especially useful during transport and storage of the bolt, ensuring that the preassembled washer 100 does not become disconnected to bolt 200.

FIG. 2B is a cross sectional view of a second example of combined washer 100. Combined washer 100 may be preassembled on bolt 220 to form a SEM bolt. SEM Bolt 220 may be similar to bolt 200, and similar parts have similar numbering. Bolt 220 includes bolt head 222 and bolt shaft 224. Bolt shaft 224 includes threads 230 and shank 226.

In this example, bolt shank 226 further includes groove 232 around an outer circumference of shank 106. Groove 232 may extend radially into shank 106, for example, an M50 bolt groove 232 may have a depth of up to 5 mm. Combined washer 100 may further include ring 112 configured to fit in groove 232 and restrict combined washer 100 from moving translationally along the length of bolt shank 206. Bolt head 222 may rotate with respect to combined washer 100 when combined washer 100 is installed on bolt 220. While disc 102 is shown in Figs. 2A-2B to be directly next to head 202, there may be some space between in some embodiments, particularly before the bolt 200, 220 is in use.

Closeup 242 illustrates how ring 112 fits in groove 232. Ring 112 is circular and extends around the inner circumference of stem 106, though could be interrupted or only extend partway around the inner circumference of stem in other embodiments. In some embodiments, ring 112 could be only a bump, tooth or other protrusion; or a number of bumps, teeth or protrusions. Groove 232 is circular and extends around the full outer circumference of shank 206 extending toward a center of shank 206. Ring 112 and groove 232 are complementary in shape while still allowing for at least rotational movement of the washer 100 with respect to the bolt 220. In some embodiments, groove 232 may be configured to allow for some translational movement along bolt shank 206, 226 as well. This allows combined washer 100 to be loosely connected to SEM bolt 220 and allows bolt 220 to rotate (for example, when being tightened for use) without rotating combined washer 100, thereby allowing for combined washer 100 to make and maintain a mechanical.

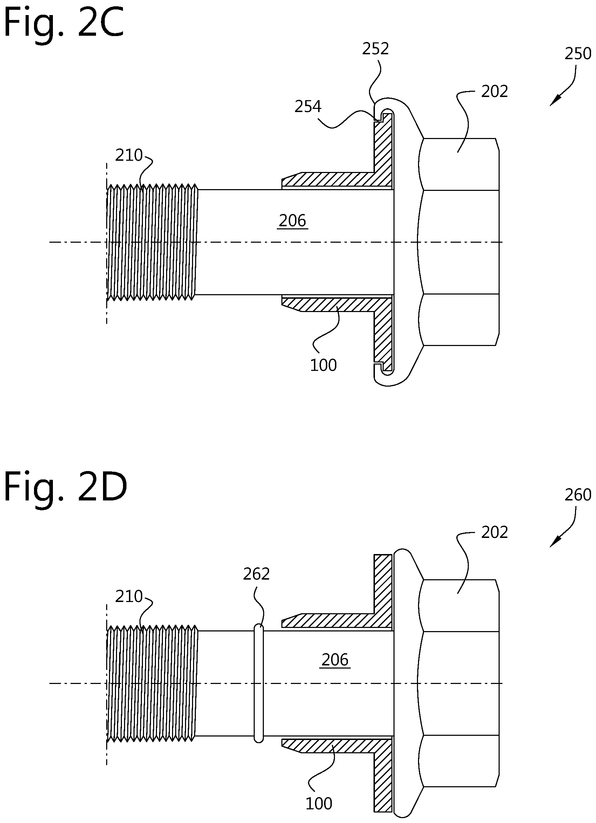

FIG. 2C illustrates cross sectional views of embodiment 250 which may also be suitable for restricting movement, such as axial movement, of combined washer 100. Embodiment 250 restricts movement of combined washer 100 translationally along the length of bolt shank 206. Embodiment 250 may include bolt 200 which further includes rim 252 in bolt head 202. Rim 252 may be configured to loosely fit around the outer edge of disc 102 of combined washer 100 to restrict its movements. Optionally, disc 102 may include notch 254 configured to fit with rim 252 such that bolt head 202 does not extend past washer surface 104. Rim 252 and notch 254 may provide a loose and secure connection between combined washer 100 and bolt 200.

FIG. 2D illustrates cross sectional views of embodiment 260 which may also be suitable for restricting movement of combined washer 100. Embodiment 260 restricts movement of combined washer 100 translationally along the length of bolt shank 206. Embodiment 260 may include bolt 200 which further includes shank ring 262 on shank 206. As shown, combined washer 100 fits on shank 206 between bolt head 202 and shank ring 262. Shank ring 262 restricts movement of combined washer 100 and prevents combined washer from coming into contact with threads 210. Embodiments 250 and 260 may be combined or separately restrict movement of washer 100.

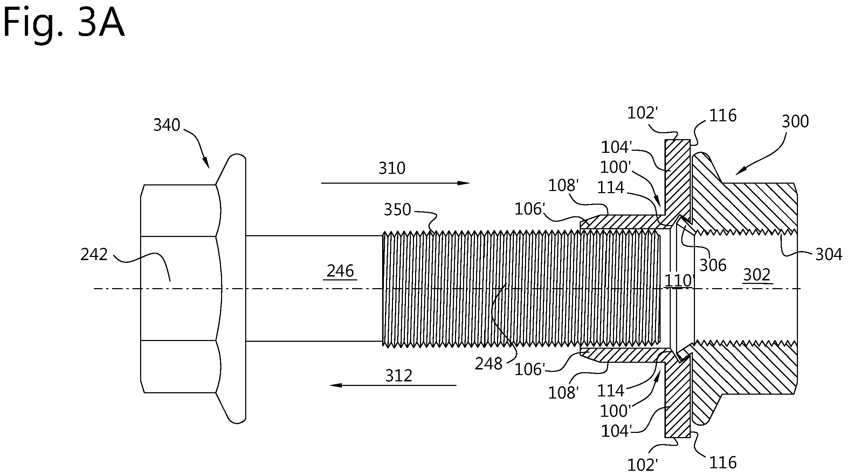

FIG. 3A is cross sectional view of a further example of a combined washer 100'. In this embodiment, combined washer 100' is preassembled on nut 300. Combined washer 100' may further include a mechanism to connect to nut 300. As shown here, nut 300 has cavity 302 configured to receive bolt shaft. Nut 300 further includes internal threads 304 configured to engage with threads 210 of bolt 200. Nut 300 also includes rim 306 configured to connect to combined washer 100'.

Combined washer 100' may further include notch 114 extending from opposing surface 116, where opposing surface 116 is opposite washer surface 104. Notch 114 generally extends from inside of the hole of disc 402 and is configured to receive rim 306 such that combined washer 100' is connected to nut 300. Combined washer 100' is connected to nut 300 such that cavity 110 aligns with cavity 302 to receive a bolt. Notch 114 and rim 306 are further configured to ensure that washer 400 stays connected to nut 300 but to also allow nut 300 to rotate while combined washer 100' does not rotate and vice versa when combined washer 100' is installed on nut 300. The preassembled nut 300 is configured to receive a bolt such as bolt 200 such that threads 210 of bolt 200 engage with nut threads 304.

Cavity 110 receives the bolt shaft, and bolt threads 350 pass through cavity 110 into cavity 302 where nut threads 350 engage with bolt threads 304 such that as nut 300 rotates, combined washer 100' does not rotate and bolt 340 is pulled in direction 310 into and through nut 300. Conversely, if nut 300 rotates in the opposite direction, combined washer 100' does not rotate and bolt 340 is pushed in direction 312 out of nut 300.

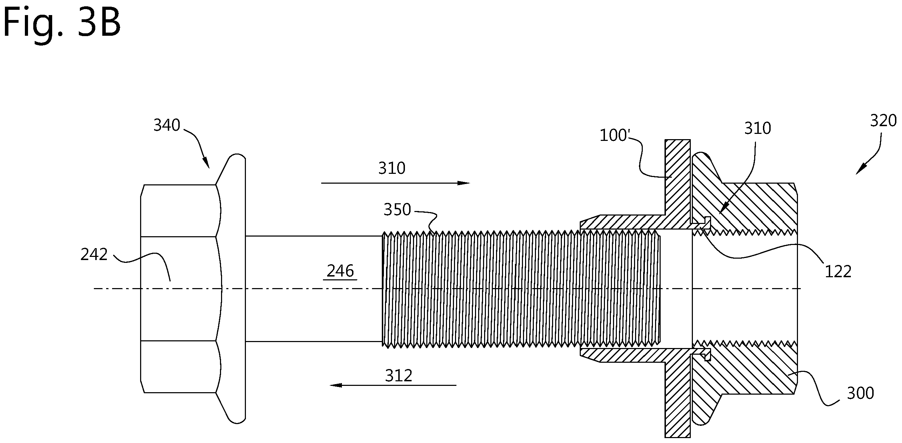

FIG. 3B illustrates cross sectional view embodiment 320 which may also be suitable for loosely and securely connecting combined washer 100' to nut 300. Embodiment 320 in which nut 300 may include notch 322 and washer ring 122 such that washer ring 122 fits inside notch 322 to loosely and securely connect combined washer 100' with nut 300. FIG. 3B illustrates embodiment 330 in which nut 300 may include nut notch 320 and washer ring 122 such that washer ring 122 fits inside nut notch 320 to loosely and securely connect combined washer 100' with nut 300.

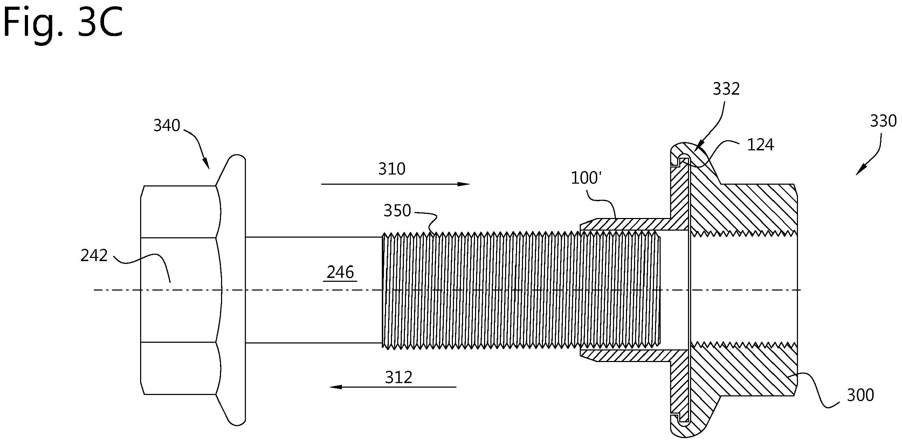

FIG. 3C illustrates cross sectional view embodiment 330 which may also be suitable for loosely and securely connecting combined washer 100' to nut 300. Embodiment 330 in which nut 300 may include rim 332. Rim 332 may be configured to loosely fit around the outer edge of disc 102 of combined washer 100. Optionally, disc 102 may include notch 124 configured to fit with rim 332 such that rum 332 of nut 300 does not extend past washer surface 104. Rim 332 and notch 124 may provide a loose and secure connection between combined washer 100' and nut 300.

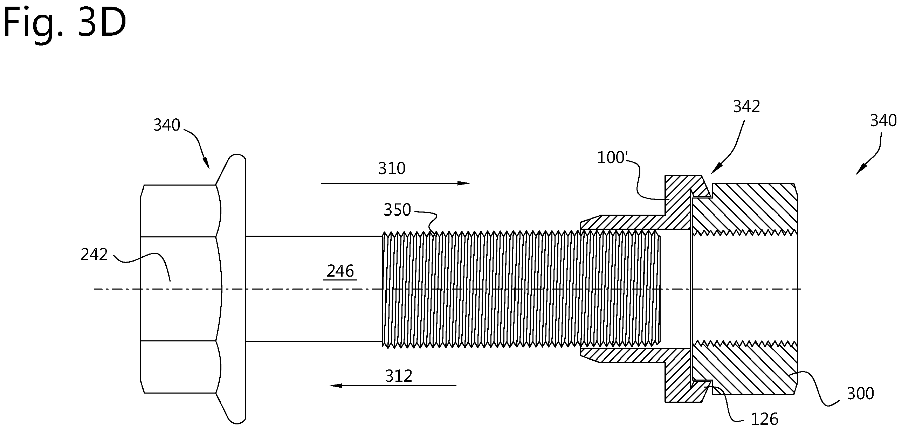

FIG. 3D illustrates cross sectional view embodiment 340 which may also be suitable for loosely and securely connecting combined washer 100' to nut 300. Embodiment 340 in which nut 300 may include notch 342 and combined washer 100' may include rim 126. Notch 342 may be configured to receive rim 126. Notch 342 and rim 126 may provide a loose and secure connection between combined washer 100' and nut 300.

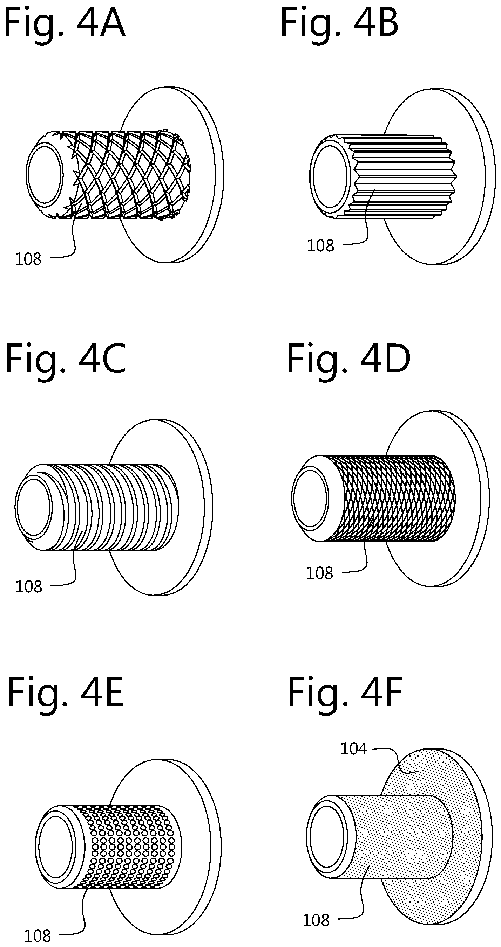

FIGS. 4A-4F are views of combined washers 100, 100' with example textured exterior surfaces 108. These surfaces are examples of surfaces that may create a locking function in a bolted joint. These examples should be in no way limiting of the type of textured exterior surface capable of generating friction and/or a mechanical lock between combined washer 100' and a receiving part.

FIG. 4A illustrates a combined washer with a knurled stem surface 108.

FIG. 4B illustrates a combined washer with a serrated stem surface 108.

FIG. 4C illustrates a combined washer with a spirally serrated stem surface 108.

FIG. 4D illustrates a combined washer with a hatched stem surface 108.

FIG. 4E illustrates a combined washer with a patten of bumps on the stem surface 108.

FIG. 4F illustrates a combined washer with a pattern of bumps on the stem surface 108 and on washer surface 104.

Additionally, in some embodiments, all or part of washer surface 104 may also include a textured surface configured to create a locking function between washer surface 104 and a surface of a receiving part. The washer surface 104 may include texture of any of the exterior textured surfaces described in FIGS. 4A - 4E or any other textured surface. For example, FIG. 4F shows a combined washer with an exterior textured surface 108 and washer surface 104 with the same textured surface as that shown in FIG. 4E. While the entire textured surfaces 108 or 104 are shown as having texture in Figs. 4A-4F, some embodiments could have only part of the surface be textured with other parts being smooth.

Textured surface can be formed through knurling and/or shot peening or any other suitable process for the defined shape and application of the combined washer.

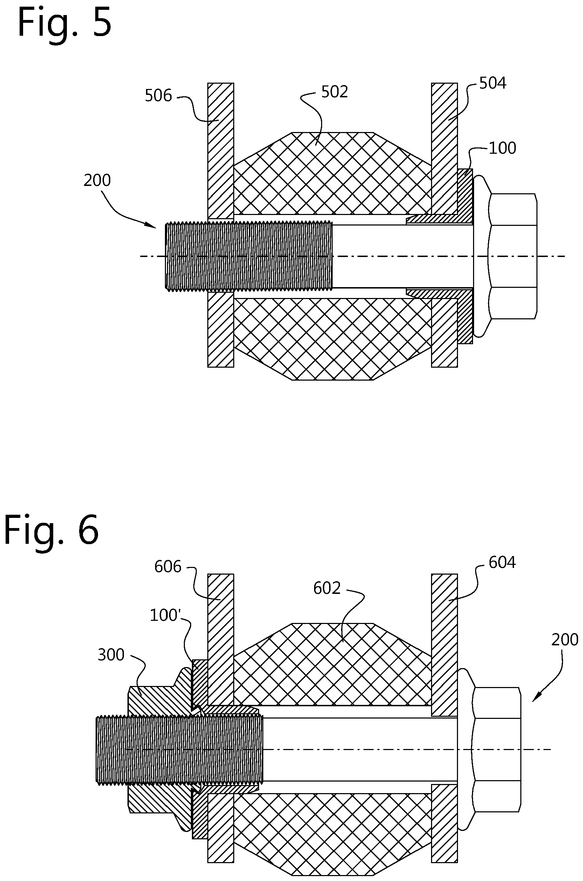

FIG. 5 illustrates a cross-sectional view of assembly 500 including combined washer 100. Assembly 500 includes first receiving part 502 and second receiving part 504 and third receiving part 506. Receiving parts 504 and 506 may be two ends of the same receiving part. Receiving parts 502, 504, 506 may be configured to receive a preassembled bolt such as bolt 200 or bolt 220.

It is not necessary to access assembly 500 from the side of receiving part 506 because a bolt is inserted in receiving part 504 and a tightening tool rotates the bolt from only its bolt head, with the textured surface 108 of combined washer 100 forming the mechanical connection on that side.

Combined washer 100, 100' of the preassembled bolt may fit inside a hole of receiving part 504 such that exterior surface 108 makes contact with receiving part 504, thereby creating a mechanical lock between combined washer 100, 100' and receiving part 504. Typically, combined washer 100, 100' is sized such that it must be press-fit into the hole of receiving part and there is no space allowing for rotation or other movement of washer 100, 100' with respect to receiving part 504. Stem 106 may additionally be sized and configured to extend through receiving part 504 and make contact with receiving part 502. Combined washer 100, 100' may make an additional mechanical lock between combined washer 100, 100' and receiving part 502 in that manner. Stem 106 may also help to align bolt shaft 204, 224 to pass through receiving parts 502, 504, and 506. Receiving part 506 includes internal threads to engage bolt threads 210, 230.

The mechanical lock created between combined washer 100, 100' and a receiving part creates a bolted joint that is more resistant to shear forces. Combined washer 100, 100' reduces the area that shear forces can act on a bolt, thus reducing the overall shear forces acting on the bolt. As a result, the bolted joint is less likely to slip as compared to a conventional bolted joint. For example, a bolted joint in a motor or engine may be subject to shear forces during operation. Over time, the shear forces may loosen the bolted joint. Incorporating a combined washer 100, 100' into bolted joint reduces the shear area of the bolted joint such that less shear forces are acting on the bolt which minimizes or prevents slippage of the. This in turn may reduce overall maintenance needed on an assembly such as a motor or engine.

Because the combined washer 100, 100' reduces the amount of shear forces acting on a bolt as compared to using conventional bolts alone, bolt size may be reduced without affecting performance. For example, depending on the assembly environment, a conventional M14 bolt in an assembly may be reduced to an M12 bolt with combined washer 100, 100' because the M12 bolt with combined washer 100, 100' can tolerate equal or greater shear forces than a convention M14 bolt.

FIG. 6 illustrates a cross-sectional view of exemplary assembly 600 including combined washer 100'. Assembly 600 includes first receiving part 602, second receiving part 604 and third receiving part 606. Receiving parts 604 and 606 may be two ends of the same receiving part. Receiving parts 602, 604, 606 may be configured to receive a bolt and a preassembled nut such as nut 300.

Combined washer 100' of preassembled nut 300 may fit inside a hole of receiving part 606 such that exterior surface 108 makes contact with receiving part 606 and creates a mechanical lock between combined washer 100' and receiving part 606. Stem 106 may be configured to extend through receiving part 606 and make contact with receiving part 602. Combined washer 100' may make an additional mechanical lock between combined washer 100' and receiving part 602. Stem 106 may be configured to receive a thread length of a bolt which passes through cavity 110 and the threads of the thread length engage with nut threads 304 of nut 300.

A conventional serrated bolt, having a serrated shank, may be used in combination with combined washer 100' of preassembled nut 300.

Assembly 600 requires access for a tightening tool to tighten nut 300 and access to insert a bolt in receiving part 604.

Serration type bolts used in assemblies generate a locking functionality in screw joints. However, a serration type bolt may be replaced by a SEM bolt 200 of a smaller size and still generate the locking functionality required for the assembly.

Reducing bolt size with the use of combined washer 100, 100'may reduce the overall weight of an assembly. For example, using an M12 bolt with a combined washer instead of a conventional M14 bolt. For M12 and M14 bolts with a nominal reference dimension of 90, an M12 bolt may wight 95 grams as compared to the weight of an M14 bolt of 134 grams. If an assembly requires 10 M14 bolts, they may replace with a preassembled M12 bolt that includes a combined washer such as combined washer 100, 100'. This would result in a reduced assembly weight of about 390 grams for an assembly that requires 10 bolts. It should be understood that assemblies requiring more bolts will have a greater reduction in weight and assemblies requiring less bolts will have a lesser reduction in weight. Including a combined washer may have the potential to reduce weight by 25 - 30% of a bolt or screw. Additionally, surround parts or mating parts of an assembly mays also be reduced.

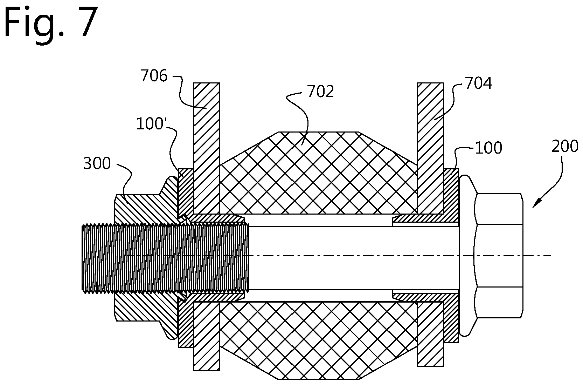

FIG. 7 illustrates a cross-sectional view of exemplary assembly 700 including combined washer 100,100'. Assembly 700 includes first receiving part 702, second receiving part 704 and third receiving part 706. Receiving parts 704 and 706 may be two ends of the same receiving part. Receiving parts 702, 704, 706 may be configured to receive a bolt such as preassembled bolt 200 and a preassembled nut such as nut 300 which include combined washers 100 and 100' respectively.

Receiving part 706 may not be threaded. Receiving part 706 may receive preassembled nut 300. Stem 106 of may be configured to align a bolt shaft to stem 106 such that threads of a bolt may engage with threads 304. Assembly 700 may require assembly tool access for both bolt head 202 and nut 300. The addition of both combined washers 100 and 100' creates a mechanical lock at both ends of assembly 700. For example, creating a mechanical lock at receiving part 704 and receiving part 706.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A combined washer (100, 100') comprising:
an annular disc (102) with a central hole (103); and
a cylindrical stem (106) comprising a textured exterior surface (108) and extending perpendicularly from a first side (104) of the annular disc (102).

2. The combined washer (100, 100') of claim 1, wherein the cylindrical stem (106) is hollow and the central hole (103) of the annular disc (102) aligns with a hollow interior (110) of the cylindrical stem (106).

3. The combined washer (100, 100') of any of the preceding claims, wherein the textured exterior surface (108) is knurled.

4. The combined washer (100, 100') of any of the preceding claims, wherein the textured exterior surface (108) comprises serrations.

5. The combined washer (100, 100') of any of the preceding claims, wherein the combined washer (100, 100') is formed of phosphorous steel.

6. The combined washer (100, 100') of any of the preceding claims, wherein the annular disc (102) has a larger diameter than the cylindrical stem (106) and extends wider than the cylindrical stem (106) to form a shoulder around the cylindrical stem (106).

7. The combined washer (100, 100') of claim 6, wherein the shoulder of the annular disc (102) comprises a further textured surface.

8. The combined washer (100) of any of the preceding claims, wherein the combined washer (100) is configured to be installed on a bolt (200, 220) or screw such that the combined washer (100) connects around a shank (206, 226) of the bolt (200, 220) or screw between a head (202, 222) and a threaded portion (208. 228) of the bolt (200, 220) or screw.

9. The combined washer (100) of claim 8, wherein the bolt (200, 220) or screw is configured to be able to rotate with respect to the combined washer (100) when the combined washer (100) is installed on the bolt (200, 220) or screw.

10. The combined washer (100') of any of claims 1-7, wherein the combined washer (100') is configured to be installed on a nut (300).

11. The combined washer (100') of claim 10, wherein a second side (116) of the combined washer (100') comprises a notch (114) configured to receive a rim (306) of the nut (300) such that the combined washer (100') is connected to the nut (300), and wherein the nut (300) is configured to be able to rotate with respect to the combined washer (100') when the combined washer (100') is installed on the nut (300).

12. The combined washer (100') of any of claims 10 or 11, wherein a hollow cylindrical stem (106) is configured to receive a threaded portion (208, 228) of a bolt (200, 220) or screw such that the threaded portion (208, 228) can pass through the stem (106) to reach the nut (300) when the combined washer (100') is installed on the nut (300).

13. The combined washer (100') of claim 12, wherein an inside (110) of the hollow cylindrical stem (106) has a larger diameter than the diameter of the threaded portion (208, 228) of the bolt (200, 208) or screw.

14. A bolt (200, 220) or screw comprising the combined washer (100) of any of claims 1-9.

15. A nut (300) comprising the combined washer (100') of any of claims 1-7 or 10-12.
